# EUROPÄISCHE PATENTSCHRIFT

(11) **EP 1 563 626 B1**
(45) Veröffentlichungstag und Bekanntmachung des Hinweises auf die Patenterteilung: **18.07.2007**
(21) Anmeldenummer: 03779665.3
(22) Anmeldetag: 24.10.2003
(51) Int. Cl.: H04J 3/16, H04J 3/22, H04Q 11/04

(54) **VERFAHREN ZUR ÜBERTRAGUNG VON HETEROGENEN DATEN IN EINER TELEKOMMUNIKATIONSANLAGE UND EINE TELEKOMMUNIKATIONSANLAGE**
METHOD FOR THE TRANSMISSION OF HETEROGENEOUS DATA IN A TELECOMMUNICATION SWITCHING SYSTEM AND A TELECOMMUNICATION SWITCHING SYSTEM
PROCEDE DE TRANSMISSION DE DONNEES HETEROGENES DANS UNE INSTALLATION DE TELECOMMUNICATION ET INSTALLATION DE TELECOMMUNICATION ASSOCIEE

(30) Priorität: 19.11.2002 DE 10253931
(43) Veröffentlichungstag der Anmeldung: 17.08.2005
(73) Patentinhaber: SIEMENS AKTIENGESELLSCHAFT, 80333 München (DE)
(72) Erfinder: LEUSCHNER, Klaus, 85591 Vaterstetten (DE); ZWACK, Eduard, 82178 Puchheim (DE)
(86) Internationale Anmeldenummer: PCT/DE2003/003539
(87) Internationale Veröffentlichungsnummer: WO 2004/047345

(56) Entgegenhaltungen:
- EP-A- 0 353 947
- WO-A-02/49275
- US-A- 5 526 346
- US-A- 6 160 823
- DOUSKALIS W: "A NUMBER THEORETIC APPROACH TO TIME DIVISION MULTIPLEXING" IEEE TRANSACTIONS ON COMMUNICATIONS, IEEE INC. NEW YORK, US, Bd. 38, Nr. 9, 1. September 1990 (1990-09-01), Seiten 1504-1510, XP000173219 ISSN: 0090-6778

## Beschreibung

Die Erfindung betrifft ein Verfahren zur Übertragung von heterogenen Daten zwischen Modulen einer Telekommunikationsanlage, vorzugsweise zwischen einer zentralen Steuerung und Schnittstellenbaugruppen der Telekommunikationsanlage, wobei die heterogenen Daten pegelartige Signale, Sprachdaten, Steuerdaten, systemrelevante Zeitsignale und/oder verschiedene Taktsignale mit unterschiedlichen Frequenzen und Impulsformen aufweisen können.

Des weiteren betrifft die Erfindung eine Telekommunikationsanlage.

Bei der bekannten Datenübertragung zwischen Modulen einer Telekommunikationsanlage, wie bei der HICOM 300-Anlage der Anmelderin, werden Signale wie Sprachdaten und Steuerungsdaten, mittels genormter Protokolle, zum Beispiel dem HDLC-Protokoll (= High Level Data Link Control-Protokoll), auf Sprachkanälen, den sogenannten High-Ways (HWYs), auf parallelen Leitungen übertragen.

Bisher wurden zwischen diesen Modulen, wobei der Abstand der Module bis zu circa 10 Meter betragen kann, meist 40-polige LTU-Kabel (= Line Terminating Unit Kabel = Leitungsendeinrichtungkabel) eingesetzt. In diesen LTU-Kabeln wurden die Signale parallel übertragen.

Ein Ziel der technischen Weiterentwicklung ist es, die Kosten einer bekannten Telekommunikationsanlage zu reduzieren. Um dieses Ziel zu erreichen, wird versucht die Kosten für Entwicklungsarbeit zu reduzieren. So sollen in einer Telekommunikationsanlage vermehrt bereits bestehende Hardwarekomponenten zum Einsatz kommen. Die bestehende Steuerung einer Telekommunikationsanlage soll zum Beispiel durch eine Steuerung ersetzt werden, die auf einer genormten cPCI-Plattform basiert.

Ein weiteres Ziel ist es, die Kosteneinsparung dadurch zu erreichen, dass möglichst alle zentralen Komponenten der Telekommunikationsanlage, wie zum Beispiel MTS (= Memory Time Switch) und CG (= Clock Generator = Taktgenerator), auf einem Chip ("System on Chip") integriert werden. Es wird also versucht, die Hardware kompakter und kostengünstiger zu gestalten.

Diese kompaktere Gestaltung der Hardwarekomponenten der Telekommunikationsanlage erschwert den Einsatz der einen verhältnismäßig hohen Platzbedarf aufweisenden LTU-Kabel, die zudem relativ kostenaufwendig sind.

Aus der Druckschrift EP 353947 A2 ist ein Multiplex-Übertragungsverfahren bekannt, bei dem unterschiedliche Datenströme zeitschlitzbasiert übertragen werden. Dabei ist eine Zeitschlitzrate vorgesehen, die das kleinste gemeinsame Vielfache der Zeitschlitzraten der verschiedenen Datenströme darstellt.

Es ist Aufgabe der Erfindung, ein Verfahren zur Übertragung von heterogenen Daten in einer Telekommunikationsanlage zu finden, das eine effiziente Übertragung einer Vielzahl verschiedener Daten zwischen Modulen der Telekommunikationsanlage, wie zum Beispiel der zentralen Steuerung und peripheren Schnittstellenbaugruppen, sowie eine Taktrückgewinnung aus den übertragenen Daten erlaubt.

Entsprechend ist es auch Aufgabe der Erfindung eine neue Telekommunikationsanlage zu beschreiben, die in der Lage ist das neue Übertragungsverfahren durchzuführen.

Diese Aufgabe wird gelöst durch ein Verfahren mit den Merkmalen des Patentanspruchs 1 sowie durch eine Telekommunikationsanlage mit den Merkmalen des Patentanspruchs 9. Vorteilhafte Weiterbildungen der Erfindung sind Gegenstand untergeordneter Patentansprüche.

Die Erfinder haben erkannt, dass die bisher auf parallelen Leitungen übertragene Daten auch in gemultiplexter Form seriell übertragen werden können. Hierdurch ist zur Übertragung der Daten eine geringere Anzahl von Leitungen notwendig.

Demgemäss schlagen die Erfinder vor, das Verfahren zur Übertragung von heterogenen Daten zwischen Modulen einer Telekommunikationsanlage, vorzugsweise zwischen einer zentralen Steuerung und Schnittstellenbaugruppen der Telekommunikationsanlage, wobei die heterogenen Daten pegelartige Signale, Sprachdaten, Steuerdaten, systemrelevante Zeitsignale und/oder verschiedene Taktsignale mit unterschiedlichen Frequenzen und Impulsformen aufweisen können, dahingehend zu verbessern, dass die heterogenen Daten zusammengefasst und serialisiert werden und die serialisierten Daten mit einer Taktfrequenz übertragen werden, die ein gemeinsames ganzzahliges Vielfaches der Taktfrequenzen der zusammenzufassenden heterogenen Daten ist.

Hierdurch wird erreicht, dass die bisher auf parallelen Leitungen, wie beispielsweise einem 40-poligen LTU-Kabel, übertragenen Daten mit weniger Leitungen, wie z.B. mit einem Ethernetkabel, übertragen werden können. Durch diese "Leitungseinsparung" können sowohl Platz als auch Hardwarekosten eingespart werden.

Es ist günstig, wenn zur Übertragung der serialisierten Daten in eine Richtung eine Leitung oder ein Leitungspaar verwendet wird. Als Übertragungsverfahren eignet sich bei dieser Ausführung der Leitungen besonders die bekannte LVDS-Technologie. Diese stellt ein gerichtetes und symmetrisches Übertragungsverfahren zur Verfügung. So ist ein symmetrisches Übertragungsverfahren unempfindlich gegen Spannungsunterschiede zwischen den Anlagenteilen. Außerdem weist ein symmetrisches Verfahren eine geringere Störstrahlung auf als ein unsymmetrisches Verfahren, das mit der halben Adernzahl auskommt.

Es kann vorgesehen sein, dass die serielle Datenübertragung in beiden Richtungen stattfindet. Wird für jede Übertragungsrichtung eine eigene Leitung oder ein eigenes Leitungspaar verwendet, so wird ein sicherer und besonders schneller, ein sogenannter High Speed Connect (= HSC) Datenaustausch gewährleistet.

Das neue Verfahren bietet verschiedene Möglichkeiten eine Taktinformation oder ein Taktsignal, wie zum Beispiel einen Rahmen-Clock oder einen Referenz-Clock, zu übertragen.

So kann je Übertragungsrichtung ein Taktsignal oder eine Taktinformation auf einer eigenen Leitung oder einem eigenen Leitungspaar übertragen werden. Diese Art der separaten Takt-Übertragung ist besonders sicher, da die anderen zu übertragenen serialisierten Daten auf separaten Leitungen übertragen werden und somit die Taktübertragung nicht beeinflussen. Diese separate Takt-Übertragung bietet sich dann an, wenn genügend freie Leitungen zur Verfügung stehen. Beispielsweise kann so in eine Übertragungsrichtung separat ein Rahmen-Takt und in die andere Übertragungsrichtung separat ein Referenz-Takt, der ein asynchrones Taktsignal darstellt, übertragen werden.

Der Referenz-Takt als asynchrones Signal kommt zum Beispiel über eine S0-Schnittstelle vom öffentlichen Amt. Um dieses Signal übertragen zu können, muss es vorher angepasst werden. Entweder verzichtet man dabei auf Information, das heißt es wird mit geringerer Auflösung gearbeitet, oder es wird mit mehr Aufwand an implementierter Logik, wie zum Beispiel einer Phasen-Messeinrichtung, die seit langem bei der HICOM-Anlage verwendet wird, gearbeitet. Eine weitere Möglichkeit besteht darin, dieses Signal auf einer eigenen Leitung zu übertragen. Normalerweise stehen die Referenz-Taktfrequenz und die Rahmen-Taktfrequenz nominell in einem ganzzahligen Verhältnis n. In der Praxis hat ein Takt-Oszillator einer Telekommunikationsanlage einige ppm Abweichung zum Referenz-Takt. Der Taktgenerator der Telekommunikationsanlage ist daher durch den Referenz-Takt zu führen. Somit sollte die Phasenlage der Taktsignale möglichst nicht verfälscht werden.

Eine weitere Möglichkeit den Takt zu übermitteln, kann dadurch realisiert werden, dass der Takt in die zu übertragenen heterogenen Daten integriert, dann serialisiert und übertragen wird, und am Ende der Leitung nach dem Dekodieren der übertragenen Daten regeneriert wird. Der Vorteil dieser Methode ist, dass auch bei einer geringen Anzahl von zur Verfügung stehenden Leitungen eine sichere Taktübermittlung gelingt. Jedoch steigt bei dieser Methode der Aufwand an zu implementierender Logik.

Ein Bit-Takt kann aus dem Rahmen-Takt phasenrichtig zurückgewonnen werden. Dieser Bit-Takt sollte eine Frequenz aufweisen, die mindestens um einen ganzzahligen Faktor n größer ist als der Rahmen-Takt. Dabei entspricht n der Anzahl der Doppeladern. Hierdurch kann der Flankenwechsel der Signale sicher abgetastet werden, um dann eine Bitsynchronisation vornehmen zu können.

Weiterhin haben die Erfinder für das neue Verfahren vorgesehen, die Daten oder den Datenstrom in einen Manchester-Code umzuwandeln. Hierdurch ergibt sich die Möglichkeit, die heterogenen Daten zusammenzufassen und zu serialisieren und dann mittels Lichtwellenleiter zu übertragen.

Wenn Lichtwellenleiter eingesetzt werden, dann erhöht sich zwangsläufig die Laufzeit, und es muss die Laufzeit mittels eines sog. Frame-Mark-Bit, dem FMBR_L, ermittelt werden. Die Sprachkanäle oder High Ways (HWYs) müssen in ihrer Phasenlage angepasst werden. Der Manchester-Code überträgt in jedem Bit den Takt und die High-Pegel und Low-Pegel sind im Mittel gleich lang, wobei der Code gleichstromfrei ist. Dadurch können zur Potentialtrennung Übertrager verwendet werden. Sollen größere Entfernungen überbrückt werden, ist eine Potentialtrennung notwendig. Üblicherweise kann dies durch Lichtwellenleiter oder Übertrager realisiert werden. Sind die Entfernungen nicht bekannt, müssen sie ermittelt werden. Dazu ist das FMBR_L-Signal vorgesehen. Der Rahmen-Takt lässt bei der Telekommunikationsanlage HICOM nur 488 Nanosekunden Verzögerung zu, dies entspricht einer Strecke von etwa 50 Metern. Mit dem FMBR_L sind Verzögerungen bis 250000 Nanosekunden möglich, dies entspricht dann einer Strecke von etwa 25 Kilometern.

Die Erfinder schlagen weiterhin vor, eine bestehende Telekommunikationsanlage, die mehrere Module aufweist, vorzugsweise eine zentrale Steuerung und periphere Schnittstellenbaugruppen, wobei zwischen den Modulen ein Datenaustausch von heterogenen Daten auf Datenleitungen stattfindet, in der Weise zu verbessern, dass nun Übertragungsmittel zum Zusammenfassen und Serialisieren der heterogenen Daten und zum Übertragen der serialisierten Daten mit einer Taktfrequenz, die ein gemeinsames ganzzahliges Vielfaches der Taktfrequenzen der zusammenzufassenden heterogenen Daten ist, vorgesehen sind.

Hierdurch wird es ermöglicht, das neue Verfahren wie oben beschrieben durchführen zu können.

So kann zumindest ein Multiplexer innerhalb der Telekommunikationsanlage derart angeordnet sein, dass die heterogenen Daten in eine Datenleitung eingespeist werden können. Es können nun verschieden Daten, wie Sprachdaten, Steuerdaten und Taktsignale oder Taktinformation auf nur einer Leitung oder einem Leitungspaar übertragen werden. Es wird also das gewünschte Ziel der Kosteneinsparung durch eine Reduzierung der Leitungsanzahl erreicht.

Weiterhin sollte zumindest ein Demultiplexer innerhalb der Telekommunikationsanlage angeordnet sein, der die serialisierten und übertragenen Daten dekodiert.

Es ist günstig, wenn in der neuen Telekommunikationsanlage, zwischen den Modulen innerhalb der Telekommunikationsanlage, vorzugsweise zwischen der zentralen Steuerung und den peripheren Schnittstellenbaugruppen, ein Ethernetkabel als Datenleitung vorgesehen ist. Hierdurch wird das gewünschte Ziel erreicht, die Hardware kompakter zu gestalten. Ethernetkabel verfügen gegenüber den bisher eingesetzten LTU-Kabeln über kleinere Anschlussdimensionen.

Zusätzliche Merkmale und Vorteile der Erfindung ergeben sich aus der nachfolgenden Beschreibung bevorzugter Ausführungsbeispiele unter Bezugnahme auf die Zeichnungen.

Die Erfindung soll nachfolgend anhand der Zeichnungen näher erläutert werden. Es stellen dar:
- Figur 1:: Prinzip der Datenübertragung;
- Figur 2:: Aufbau des Sende- und Empfangsanteils einer Steuerbaugruppe;
- Figur 3:: Beispiel einer Verteilung der Daten auf einer Leitung;
- Figur 4:: Signalverlauf und Methode der Synchronisierung.

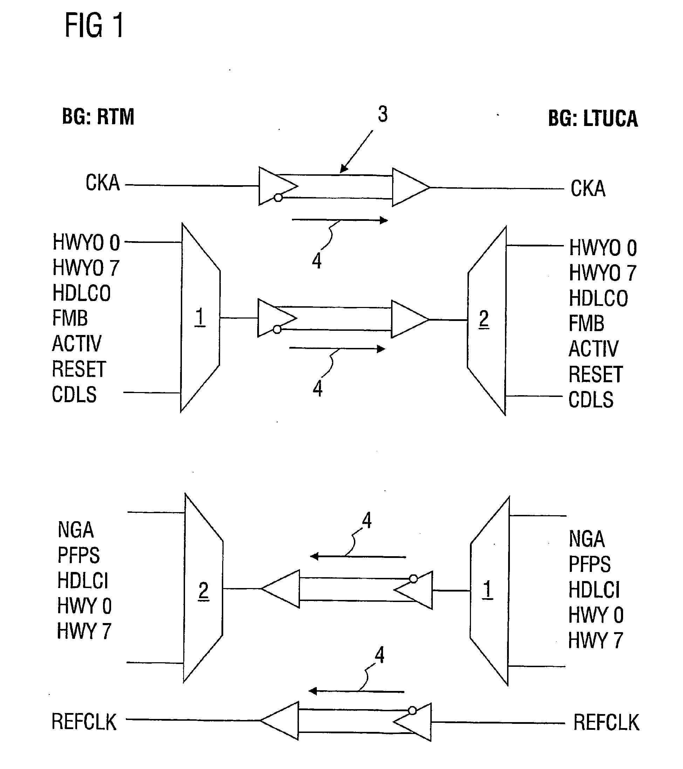

Die Figur 1 veranschaulicht das Prinzip der Datenübertragung zwischen zwei Baugruppen BG innerhalb einer Telekommunikationsanlage mit einem Ethernetkabel, das hier aus vier Doppeladern aufgebaut ist. Die Richtung der Datenübertragung wird durch die Pfeilrichtung 4 angezeigt.

Die linke Seite in Figur 1 soll die Baugruppe BG Real-Transmitting-Modul RTM darstellen. Die rechte Seite stellt eine weitere Anschlussgruppe, die Line-and-Trunk-Unit-Control-Advanced (= LTUCA), dar. In den oberen beiden Schaltungsfiguren wird die Datenübertragung von der Baugruppe RTM zur Baugruppe LTUCA dargestellt. Der System-Clock (Systemtakt), hier der CKA, der eine Frequenz von 2,048 Megahertz aufweist, wird auf einer eigenen Doppelader 3 des Ethernetkabels von RTM zu LTUCA übertragen. Die weiteren Signale, wie Sprachdaten, die sich auf den High-Ways HWYO 0 bis HWYO 7 befinden, sowie die Steuerdaten wie Activ-Signal, Frame-Mark-Bit FMB, Reset-Signal, Cordless-Signal CDLS, werden auf einer zweiten Doppelader 3 des Ethernetkabels in gemultiplexter Form übertragen. Hierzu befindet sich auf der Baugruppe RTM ein Multiplexer 1, der die Daten in die Leitung einspeist. Auf der Seite der Baugruppe LTUCA ist ein Demultiplexer 2 angebracht, um die Daten, die auf einer Doppelader 3 übertragen werden, wieder zu dekodieren.

In den beiden unteren Schaltungsfiguren der Figur 1 wird die prinzipielle Datenübertragung von der Baugruppe LTUCA zur Baugruppe RTM dargestellt. Überwachungssignale wie Netzgerät-Ausfall NGA, Power-Fail-Power-Supply PFPS werden mit einem Multiplexer 1 auf der Baugruppe LTUCA in das Ethernetkabel eingespeist, über eine Doppelader 3 übertragen und auf der Baugruppe RTM mit einem Demultiplexer 2 demultiplext empfangen. Der Referenz-Takt REFCLK wird auf einer eigenen Doppelader 3 des Ethernetkabels von der Baugruppe LTUCA zur Baugruppe RTM übertragen.

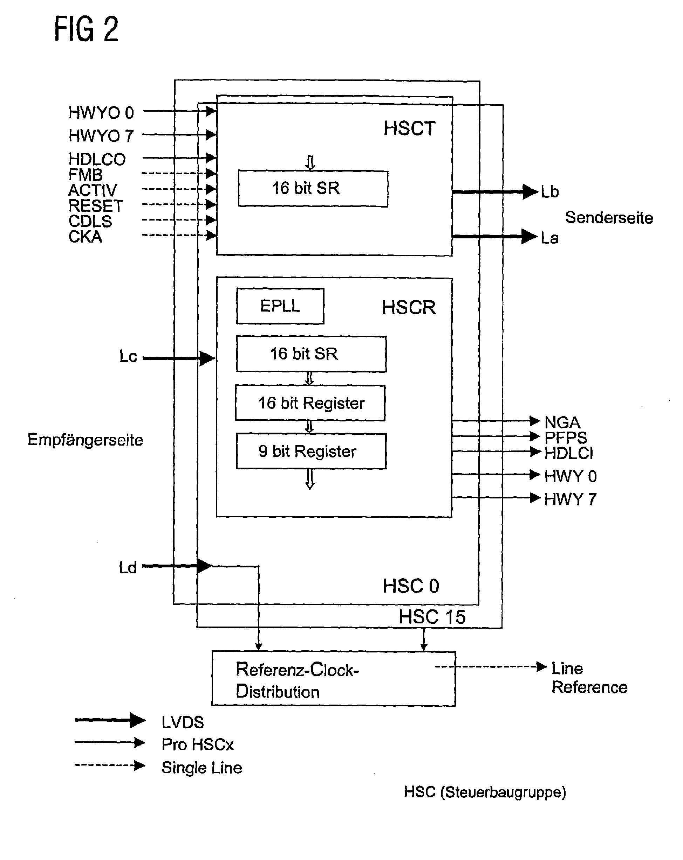

Die Figur 2 zeigt den Aufbau des Sendeanteils und des Empfangsanteils eines High-Speed-Connect HSC auf der Steuerbaugruppe. Zum Senden wird ein Takt mit einer Frequenz von 2,048 Megahertz auf der Leitung La verwendet. Dieser Takt ist der Bit-Clock des bisherigen Vermittlungssystems. Der Bit-Clock kann auch aus der Leitung Lb zurückgewonnen werden. Auf den Leitungen Lb und Lc werden die gemultiplexten Daten übertragen. Bei den Daten handelt es sich um Signale, wie die Sprachsignale der High-Ways HWY 0 bis HWY 7, die HDLC0, FMB und asynchrone Signale, wie das Reset-Signal, Activ-Signal und Power-Fail-Signal.

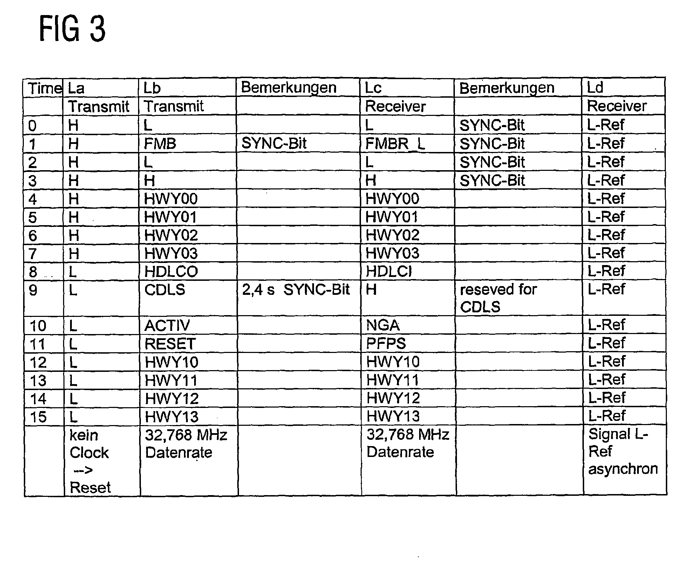

Die Figur 3 zeigt in einer Tabelle ein Beispiel dafür, wie die Daten auf den Leitungen La und Lb, die zur Senderseite führen, und den Leitungen Lc und Ld, die von dem Empfänger kommen, verteilt sein können.

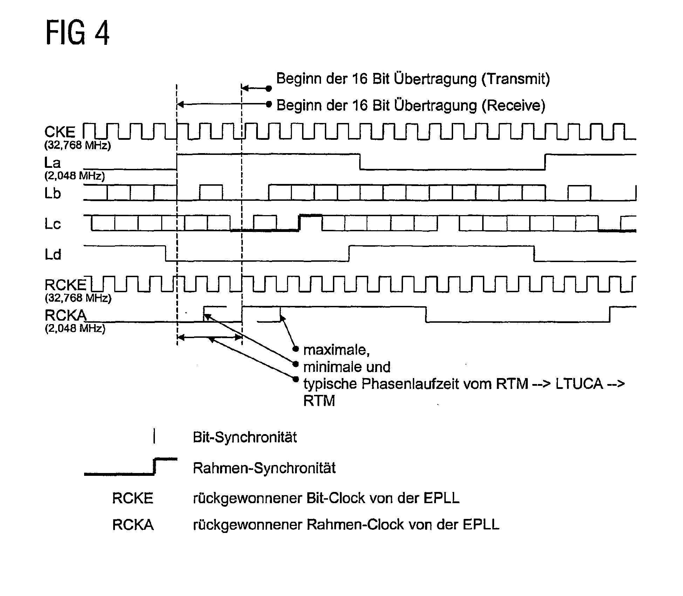

Die Kurven in der Figur 4 zeigen den Signalverlauf in den Leitungen La bis Ld und erläutern die Methode der Synchronisierung. Auf der Abszisse ist die Zeitachse dargestellt, auf der Ordinate werden die 0/1-Pegel der Daten wiedergegeben.

Die Leitungen La bis Lb können zum Beispiel durch ein Ethernetkabel, das vier Doppeladern aufweist, realisiert werden. Auf den einzelnen Doppeladern werden die Daten in gemultiplexter Form übertragen.

In der obersten Kurve wird der Bit-Clock, auch CKE-Takt genannt, dargestellt, der hier eine Taktfrequenz von 32,768 Megahertz hat. Diese Frequenz entspricht 16 mal der Taktfrequenz des in der Leitung La übertragenen Taktes. Dieser CKE-Takt wird in Figur 4 nicht über die Leitungen La bis Ld übertragen.

Die zweite Kurve zeigt einen Signalverlauf in der Leitung La, der mit dem Rahmen-Takt, auch CKA-Takt genannt, nämlich 2,048 Megahertz des Vermittlungssystems der Telekommunikationsanlage übertragen wird. Die Leitung La kann beispielsweise innerhalb einer Telekommunikationsanlage von der Baugruppe RTM zur Baugruppe LTUCA führen.

Die beiden Kurven Lb und Lc zeigen den Pegelverlauf der Daten, die jeweils in den Leitungen Lb und Lc übertragen werden.

Die Kurve Ld zeigt den Verlauf des Referenz-Taktes oder Referenz-Clocks, in der Leitung Ld, der von einer Baugruppe der Telekommunikationsanlage, zum Beispiel der LTUCA, zu einer anderen Baugruppe, zum Beispiel RTM, übertragen wird. Der Referenz-Clock ist ein besonders wichtiges Signal, da durch ihn die Phasenlage des Signals im Wesentlichen unverfälscht übertragen werden muss. Aus diesem Grund wurde für den Referenz-Clock eine eigene Leitung definiert.

Die beiden untersten Kurven zeigen den rückgewonnene Bit-Clock RCKE, in diesem Beispiel mit der Frequenz von 32,768 Megahertz, der aus der EPLL regeneriert wurde. Die unterste Kurve zeigt den aus der EPLL zurückgewonnen Rahmen-Clock CKA-Takt von 2,048 Megahertz.

Im Folgenden wird kurz beschrieben, wie aus den auf den Leitungen La bis Ld übertragenen Daten, der Bit-Clock CKE und der Rahmen-Clock CKA (beide unteren Kurven) zurückgewonnen werden kann. Diese werden dann mit RCKE und RCKA bezeichnet.

Bei der Übertragung der Daten in den Leitungen kann es wegen der Laufzeit der Signale in Hin- und Rückrichtung zu Verzögerungen kommen, die mehr als eine Clockperiode betragen können. Die Laufzeitunterschiede müssen synchronisiert werden.

Bei der bitweisen Datenübertragung in den Leitungen Lb und Lc sind nicht alle Bits mit Daten belegt. Die ungenutzten Bis sind mit statistischen Pegeln belegt. Diese ungenutzten Bits werden nun verwendet um den Rahmen-Clock CKA zu regenerieren. Hierzu wird auf die ungenutzten Bits der Rahmen-Clock gelegt. In Figur 4 ist dies die Bitfolge: "0001", die in der Kurve Lc fett gedruckt dargestellt ist. Diese Bitfolge wird sowohl in regelmäßigen als auch in unregelmäßigen Zeitabständen auf der Leitung Lc mit einem ganzzahligen Vielfachen der Rahmentaktfrequenz übertragen. In einem Zeitfenster, dessen Größe sich aus der typischen Phasenlaufzeit der Signale ergibt, werden diese übertragenen Bitfolgen überwacht. Tritt die Bitfolge: "0001" mit einer bestimmten Häufigkeit auf, so kann diese von einer zufällig übertragenen 0001-Datenbitfolge unterschieden werden. Da die "0001" mit einem ganzzahligen Vielfachen der Rahmentaktfrequenz übertragen wird, kann der Rahmen-Takt hierdurch regeneriert werden.

Es werden vier Bits pro Rahmen-Takt benötigt, um die Synchroninformation zu Übertragen. Ist diese Information einmal richtig erkannt, wird sie nur noch zur Kontrolle benötigt. Die Übertragungskapazität ist gering. Anderseits sind Takte zu übertragen, die zum Beispiel 511 Rahmentakte einen Low-Pegel haben und dann für einen Takt einen High-Pegel. Daher die Idee 511 mal LLLH zu senden und einmal LHLH. Würde noch weitere Übertragungskapazität benötigt werden, so könnte das CDLS-Signal genutzt werden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Insgesamt wird also durch die Erfindung ermöglicht, verschiedene Daten zwischen Modulen innerhalb einer Telekommunikationsanlage zu übertragen, wobei die Telekommunikationsanlage hardwareseitig kompakter gestaltet wurde, zum Beispiel hinsichtlich der Übertragungsleitungen.

## Patentansprüche

1. Verfahren zur Übertragung von heterogenen Daten zwischen Modulen einer Telekommunikationsanlage, wobei die heterogenen Daten Sprachdaten; Steuerdaten, systemrelevante Zeitsignale oder verschiedene Taktsignale mit unterschiedlichen Frequenzen und Impulsformen aufweisen können, wobei
die heterogenen Daten zusammengefasst und serialisiert werden und die serialisierten Daten mit einer Taktfrequenz übertragen werden, die ein gemeinsames ganzzahliges Vielfaches der Taktfrequenzen der zusammenzufassenden heterogenen Daten ist,
**dadurch gekennzeichnet,**
**dass** ein Taktsignal der zusammenzufassenden heterogenen Daten aus den serialisierten Daten regeneriert wird, indem ungenutzte Bits der zu übertragenden serialisierten Daten mit einer dieses Taktsignal repräsentierenden Bitfolge belegt werden, deren Auftreten in den übertragenen serialisierten Daten überwacht wird.

2. Verfahren gemäß Patentanspruch 1,
**dadurch gekennzeichnet, dass**
zur Übertragung der serialisierten Daten in eine Richtung eine Leitung oder ein Leitungspaar, auch Doppelader genannt, verwendet wird.

3. Verfahren gemäß einem der voranstehenden Patentansprüche,
**dadurch gekennzeichnet, dass**
die serielle Datenübertragung in beiden Richtungen stattfindet.

4. Verfahren gemäß einem der voranstehenden Patentansprüche,
**dadurch gekennzeichnet, dass**
je Übertragungsrichtung eine Taktinformation oder ein Taktsignal auf einer eigenen Leitung oder einem eigenen Leitungspaar übertragen wird.

5. Verfahren gemäß einem der voranstehenden Patentansprüche,
**dadurch gekennzeichnet, dass**
in beide Übertragungsrichtungen eine Rahmen-Taktinformation oder ein Rahmen-Taktsignal übertragen wird.

6. Verfahren gemäß einem der voranstehenden Patentansprüche,
**dadurch gekennzeichnet, dass**
eine Taktinformation oder ein Taktsignal als Bit-Takt fungiert und eine Taktfrequenz aufweist, die mindestens um einen ganzzahligen Faktor n größer ist als die Frequenz eines Rahmen-Taktes, wobei n der Anzahl der verwendeten Leitungspaare entspricht.

7. Verfahren gemäß einem der voranstehenden Patentansprüche,
**dadurch gekennzeichnet, dass**
die serialisierten Daten mit Hilfe von Lichtwellenleitern übertragen werden.

8. Verfahren gemäß einem der voranstehenden Patentansprüche,
**dadurch gekennzeichnet, dass**
die heterogenen Daten in einen Manchester-Code umgewandelt werden.

9. Telekommunikationsanlage, die mehrere Module aufweist, wobei zwischen den Modulen ein Datenaustausch von heterogenen Daten auf Datenleitungen stattfindet,
mit Übertragungsmitteln
zum Zusammenfassen und Serialisieren der heterogenen Daten und
zum Übertragen der serialisierten Daten mit einer Taktfrequenz, die ein gemeinsames ganzzahliges Vielfaches der Taktfrequenzen der zusammenzufassenden heterogenen Daten ist,
**dadurch gekennzeichnet,**
**dass** die Übertragungsmittel ausgestaltet sind zum Regenerieren eines Taktsignals der zusammenzufassenden heterogenen Daten aus den serialisierten Daten, indem ungenutzte Bits der zu übertragenden serialisierten Daten mit einer dieses Taktsignal repräsentierenden Bitfolge belegt werden, deren Auftreten in den übertragenen serialisierten Daten überwacht wird.

10. Telekommunikationsanlage gemäß dem voranstehenden Patentanspruch 9,
**dadurch gekennzeichnet, dass**
zumindest ein Multiplexer innerhalb der Telekommunikationsanlage angeordnet ist, der die heterogenen Daten in eine Datenleitung einspeist.

11. Telekommunikationsanlage gemäß Patentanspruch 9 oder 10,
**dadurch gekennzeichnet, dass**
zumindest ein Demultiplexer innerhalb der Telekommunikationsanlage angeordnet ist, der die serialisierten und übertragenen Daten dekodiert.

12. Telekommunikationsanlage gemäß einem der voranstehenden Patentansprüche 9 bis 11,
**dadurch gekennzeichnet, dass**
zwischen den Modulen ein Ethernetkabel als Datenleitung vorgesehen ist.

## Claims

1. Method for transmission of heterogeneous data between modules of a telecommunication switching system, with the heterogeneous data being able to be voice data, control data, system-relevant time signals or different clock signals with different frequencies and pulse forms, with the heterogeneous data being combined and serialized and the serialized data being transmitted with a clock frequency which is a common integer multiple of the clock frequency of the heterogeneous data to be combined,
**characterised in that**
a clock signal of the combined heterogeneous data is regenerated from the serialized data, by unused bits of the serialised data to be transmitted being occupied by a bit sequence representing this clock signal, of which the occurrence in the transmitted serialized data is monitored.

2. Method according to claim 1,
**characterised in that**,
for transmission of the serialised data in one direction a line or a pair of lines, also called twin wires, is used.

3. Method according to one of the previous claims,
**characterised in that**,
the serial data transmission is undertaken in both directions.

4. Method according to one of the previous claims,
**characterised in that**,
for each direction of transmission clock information or a clock signal is transmitted on a separate line or a separate line pair.

5. Method according to one of the previous claims,
**characterised in that**,
frame clock information or a frame clock signal is transmitted in both directions of transmission.

6. Method according to one of the previous claims,
**characterised in that**,
Clock information or a clock signal functions as a bit clock and has a clock frequency which is greater by at least an integer factor n than the frequency of a frame clock, with n corresponding to the number of pairs of lines used.

7. Method according to one of the previous claims,
**characterised in that**,
the serialised data is transmitted with the aid of optical waveguides.

8. Method according to one of the previous claims,
**characterised in that**,
the heterogeneous data is converted into a Manchester code.

9. Telecommunication switching system featuring a number of modules, with heterogeneous data being exchanged on data lines between the modules,
with transmission means
for combining and serialising the heterogeneous data and
for transmitting the serialised data at a clock frequency which is a common integer multiple of the clock frequency of the heterogeneous data to be combined,
**characterised in that**
the transfer means is embodied to regenerate a clock signal of the heterogeneous data to be combined from the serialized data, by occupying unused bits of the serialized data to be transmitted with a bit sequence representing this clock signal, the occurrence of which in the transmitted
serialised data is monitored.

10. Telecommunication switching system according to the previous claim 9,
**characterised in that**,
at least one multiplexer is arranged within the telecommunication switching system which injects the heterogeneous data into a data line.

11. Telecommunication switching system in accordance with claim 9 or 10,
**characterised in that**,
At least one demultiplexer is arranged within the telecommunication switching system which decodes the serialised and transmitted data.

12. Telecommunication switching system in accordance with one of the previous claims 9 to 11,
**characterised in that**,
an Ethernet cable is provided as the data line between the modules.

## Revendications

1. Procédé pour la transmission de données hétérogènes entre des modules d'une installation de télécommunication, les données hétérogènes pouvant présenter des données vocales, des données de commande, des signaux de temps importants au niveau du système ou différents signaux de rythme avec différentes fréquences et formes d'impulsion,
les données hétérogènes étant regroupées et sérialisées et les données sérialisées étant transmises avec une fréquence de rythme qui est un multiple entier commun des fréquences de rythme des données hétérogènes à regrouper,
**caractérisé en ce que**,
un signal de rythme de données hétérogènes à regrouper est régénéré à partir des données sérialisées, par le fait que des bits non utilisés des données sérialisées à transmettre sont occupés avec une séquence binaire représentant ce signal de rythme, dont l'apparition est surveillée dans les données sérialisées transmises.

2. Procédé selon la revendication 1,
**caractérisé en ce que**
une ligne ou une paire de lignes, appelée également double brin, est utilisée pour la transmission des données sérialisées dans une direction.

3. Procédé selon l'une quelconque des revendications précédentes,
**caractérisé en ce que**
la transmission de données série a lieu dans les deux directions.

4. Procédé selon l'une quelconque des revendications précédentes,
**caractérisé en ce que**
une information de rythme ou un signal de rythme est transmis par direction de transmission sur une ligne propre ou une paire de lignes propre.

5. Procédé selon l'une quelconque des revendications précédentes,
**caractérisé en ce que**
une information de rythme de trame ou un signal de rythme de trame est transmis(e) dans les deux directions de transmission.

6. Procédé selon l'une quelconque des revendications précédentes,
**caractérisé en ce que**
une information de rythme ou un signal de rythme fait office de rythme binaire et présente une fréquence de rythme qui est supérieure d'au moins un facteur entier n à la fréquence d'un rythme de trame, n étant le nombre des paires de lignes utilisées.

7. Procédé selon l'une quelconque des revendications précédentes,
**caractérisé en ce que**
les données sérialisées sont transmises à l'aide de guides d'ondes optiques.

8. Procédé selon l'une quelconque des revendications précédentes,
**caractérisé en ce que**
les données hétérogènes sont converties en un code de Manchester.

9. Installation de télécommunication qui présente plusieurs modules, un échange de données hétérogènes ayant lieu entre les modules sur des lignes de données,
avec des moyens de transmission
pour le regroupement et la sérialisation des données hétérogènes et
pour la transmission des données sérialisées avec une fréquence de rythme qui est un multiple entier commun des fréquences de rythme des données hétérogènes à regrouper,
**caractérisée en ce que**
les moyens de transmission sont conçus pour régénérer un signal de rythme des données hétérogènes à regrouper à partir des données sérialisées, du fait que des données non utilisées des données sérialisées à transmettre sont occupées avec une séquence binaire représentant ce signal de rythme, dont l'apparition est contrôlée dans les données sérialisées transmises.

10. Installation de télécommunication selon la revendication 9 précédente,
**caractérisée en ce que**
au moins un multiplexeur, qui injecte des données hétérogènes dans une ligne de données, est disposé à l'intérieur de l'installation de télécommunication.

11. Installation de télécommunication selon la revendication 9 ou 10,
**caractérisée en ce que**
au moins un démultiplexeur, qui décode les données sérialisées et transmises, est disposé à l'intérieur de l'installation de télécommunication.

12. Installation de télécommunication selon l'une quelconque des revendications 9 à 11,
**caractérisée en ce que**
un câble Ethernet est prévu comme ligne de données entre les modules.
